# EUROPEAN PATENT APPLICATION

(11) **EP 2 452 573 A1**
(43) Date of publication of application: **16.05.2012**
(21) Application number: 10191204.6
(22) Date of filing: 15.11.2010
(51) Int. Cl.: A23L 1/29, A23L 1/30, A23L 1/305

(54) **Age-tailored nutritional composition with animal fats and vegetable fats**

(71) Applicant: Nestec S.A., 1800 Vevey (CH)
(72) Inventor: Klassen, Petra Gerda, 1806, St. Legier (CH); Magliola, Corinne, 1009, Pully (CH)
(74) Representative: Corticchiato, Olivier

(57) **Abstract**

The present invention relates to nutritional formulae which are specifically designed to address the needs of infants and young children of at least 2 years of age. In particular, the invention provides a set of nutritional compositions for infants and young children, each nutritional composition having an age-specific fat composition. The set of the invention is specifically aimed at providing long-term benefits to infants and young children by meeting the nutritional needs of the infants and young children at each specific age.

## Description

### Field of the invention

The present invention relates to nutritional formulae to address the needs of infants and young children aged between 0 and 2 years. In particular, the invention provides a set of nutritional compositions for infants and young children, each one of the set of nutritional composition having an age-specific fat composition. The set of nutritional compositions is specifically aimed at providing long-term benefits to the infants and young children by meeting nutritional needs of the infants and young children at specific ages.

### Background of the invention

Infant formulae, follow-up formulae and growing-up milks aimed at different age groups of 0 to 6 months, 6 months to 1 year, 1 year to 2 years and 2 to 3 years are known. These Infant formulae, follow-up formulae and growing-up milks aim to meet the requirements of infants and young children at the different ages.

An age-tailored nutrition system for infants is described in international patent application publication No. WO 2009/068549, wherein a protein nature and content are adapted to specific age groups.

The World Health Organisation (WHO) and Codex Alimentarius Commission guidelines (CODEX) recommendations state that a minimum of 4.4 g/100kcal of fat should be present and not exceed 6 g/100kcal for infant formulae. For follow-up formulae, the CODEX recommendations state that the products shall not provide less than 3g fat per 100kcal and not more than 6g fat per 100kcal.

Regarding the types of fat present, a trend historically was to provide infant formulae comprising a mix of milk fat and vegetable fat in a ratio of 80% to 20%. However, these infant formulae were found to be deficient mainly in the essential fatty acid alpha-linolenic acid.

In the last few decades, there has been a tendency to provide conventional infant formulae comprising vegetable fats only.

However, it has also been found that infant formulae comprising vegetable fats only do not provide the adequate gangliosides, phospholipids and cholesterol to infants and young children.

It is therefore important to address these deficiencies. It is also important to address the type of fat needed at specific ages of the infants and young children especially during the critical growth period of the infants and young children.

It is also important to develop formulae for infant and young child which replicate human breast milk especially in terms of nutrient composition.

There is also a need to provide a set of nutritional compositions adapted to specific ages of infants and children, each composition being particularly tailored to provide the optimal fat content (especially in terms of fat source or fat quantity)for each individual age.

There is a need to provide such set of composition that mimics the evolution of breast milk and complementary food for later age) that are conventionally provided to infants and children.

### Object of the invention

An aim of the present invention is to ensure an optimal balance of fatty acids in infant and young child formulae at all ages.

It is also an object of the present invention to follow the nutritional evolution curve of human breast milk at all ages.

### Summary of the invention

The object is solved by means of the independent claims.

The dependent claims further develop the central idea of the invention.

Thus, in a first aspect, the present invention relates to a set of nutritional compositions for infants and young children. The set of nutritional compositions for infants and young children comprises at least a first composition for infants between 0 and 6 months wherein the first composition comprises fat consisting of a mix of vegetable fats and animal fats, preferably in a ratio of 70:30 to 30:70, more preferably in a ratio of 60:40 to 40:60, and ideally in a ratio of 50:50, a second composition for infants between 6 months and 1 year comprising vegetable fats and animal fat; and a third composition for young children between 1 year and 2 years comprising vegetable fats and animal fat.

In a further aspect, the present invention relates to a use of the set of nutritional compositions for infants and young children for providing an infant with a balanced nutritional diet for at least the first three years of life.

In a further aspect, the present invention relates to a method for providing nutrition to an infant in at least the first two years of life comprising feeding infants and young children the set of nutritional compositions

In a further aspect, the present invention relates an infant and young children nutrition regimen. The infant and young children nutrition regimen comprising feeding said infant between 0 to 6 months a nutritional composition comprising fat consisting of a mix of vegetable fats and milk fats, such that the total daily intake is at least 300 kcal, preferably between 400 - 650 kcal, feeding said infant between 6 months and 1 year a nutritional composition comprising fat consisting of a mix of vegetable fats and milk fats and complementary solid foods such that the total daily intake is at least 600 kcal, preferably between 600 - 900 kcal; and feeding said young child from 1 year to 2 years a nutritional composition comprising fat consisting of a mix of vegetable fats and milk fats and complementary solid foods such that the total daily intake is at least 700 kcal, preferably between 700 - 1100 kcal.

Furthermore the present invention relates to an age-tailored nutrition kit for infants and young children. The age-tailored nutrition kit for infants and young children comprises a set of nutritional compositions according to any of claims 1 to 10. The set of nutritional compositions are packed in single dose units, preferably capsules, each single dose unit comprising sufficient nutritional composition to prepare a single serving upon reconstitution with water

### Detailed description of the invention

For a complete understanding of the present invention and the advantages thereof, reference is made to the following detailed description of the invention

It should be appreciated that various embodiments of the present invention can be combined with other embodiments of the invention and are merely illustrative of the specific ways to make and use the invention and do not limit the scope of the invention when taken into consideration with the claims and the following detailed description.

In the present description, the following words are given a definition that should be taken into account when reading and interpreting the description, examples and claims.

Infant: according to the Commission Directive 2006/141/EC of 22 December 2006 on infant formulae and follow-on formulae, article 2 (a), the term "infants" means children under the age of 12 months.

Young Children: according to the Commission Directive 2006/141/EC of 22 December 2006 on infant formulae and follow-on formulae, article 2 (b), the term "young children" means children aged between one and three years.

Infant formulae: according to the Commission Directive 2006/141/EC of 22 December 2006 on infant formulae and follow-on formulae, article 2 (c), the term "infant formulae" means foodstuffs intended for particular nutritional use by infants during the first months of life and satisfying by themselves the nutritional requirements of such infants until the introduction of appropriate complementary feeding. It has to be understood that infants can be fed solely with infant formulas, or that the infant formula can be used by the carer as a complement of human milk. It is synonymous to the widely used expression "starter formula".

Follow-on formulae: according to the Commission Directive 2006/141/EC of 22 December 2006 on infant formulae and follow-on formulae, article 2 (d), the term "follow-on formulae" means foodstuffs intended for particular nutritional use by infants when appropriate complementary feeding is introduced and constituting the principal liquid element in a progressively diversified diet of such infants.

Probiotic: according to the paper Probiotics in Man and Animals, J. Appl Bacteriol. 66: 365-378, a probiotic is defined as a live microbial feed supplement which beneficially affects the host animal by improving its intestinal microbial balance.

Essential fatty acid: A fatty acid that cannot be synthesized by the body, and therefore must be provided by the diet.

The present invention relates to a set of nutritional compositions for infants and young children. The set of nutritional compositions for infants and young children is formed of at least three nutritional compositions aimed at to at least three different age groups.

In the present invention, the nutritional compositions can be in a form of a powder to be reconstituted with water. The nutritional compositions can be in a form of a concentrate to be diluted. Upon reconstitution or dilution of the nutritional compositions an end product is preferably a liquid.

The set of nutritional compositions comprises a first composition for infants between 0 and 6 months. The first composition comprises fat consisting of a mix of vegetable fats and animal fats. Preferably, the ratio of vegetable fats to animal fats is 70:30 to 30:70. More preferably the ratio of vegetable fats to animal fats is 60:40 to 40:60. Even more preferably the ratio of vegetable fats to animal fats is 50:50.

The set of the invention comprises a second composition for infants between 6 months and 1 year. The second composition comprises vegetable fats. Optionally, the second composition may also comprise animal fats.

The set of the invention comprises further a third composition for young children between 1 year and 2 years. The third composition comprises vegetable fats. Optionally, the third composition may also comprise animal fats.

The set of the invention preferably comprises a fourth composition for young children above 2 years. The fourth composition comprises fat consisting of vegetable fats. The fourth composition of the set of nutritional compositions takes into account the fact that complementary foods generally provide sufficient amounts of animal fats. Thus, the fourth composition comprises fat consisting of vegetable fats only, and provides much less saturated fatty acids than the compositions known in the art.

The fats used in the present invention are commercially available.

The vegetable fats are preferably selected from palm olein, high oleic sunflower oil, high oleic safflower oil, coconut oil, soy oil, canola oil, sunflower oil, safflower oil, soy lecithin, single cell oils derived from fungus and algae or any mixtures thereof. The vegetable fat is a source of alpha-linolenic acid.

The animal fats may be selected from milk fat or fish fat or any mixtures thereof. Preferably, the animal fat is milk fat.

The fat content of the first composition is between 44 and 54% of the total energy for said first composition, more preferably the fat content of the first composition is between 46 and 52% of the total energy for said first composition.

The first composition has a fat content of between 5 and 6g/100kcal. Preferably, the fat content is between 5.1 to 5.8g/100kcal.

The fat content of the second composition is between 44 and 54% of the total energy for said second composition, preferably the fat content of the second composition is between 48 and 52% of the total energy for said second composition.

The second composition has a fat content of between 5 and 6g/100kcal. Preferably, the fat content is between 5.3 and 6g/100 kcal, most preferably it is 5.6g/100kcal.

The fat content of the third composition is between 44 and 54% of the total energy for said third composition, preferably the fat content of the third composition is between 48 and 52% of the total energy for said third composition.

The fat content of the third composition is between 5 and 6g/100kcal. Preferably the fat content is between 5.5 and 6g/100 kcal, most preferably it is 5.6g/100kcal.

The fat content of the fourth composition is between 30 and 45% of the total energy for said fourth composition, preferably the fat content of the fourth composition is between 33 and 40% of the total energy for said fourth composition.

The fat content of the fourth composition is between 3 and 5g/100kcal. Preferably, the fat content is between 3.5 and 4.5g/100kcal, most preferably it is 4g/100kcal.

The compositions which form part of the set according to the invention provide a fat content and a fat profile which better meets the needs of infants and young children at the different ages. In particular, the fat content of the second composition for infants between 6 months and 1 year is higher than conventional compositions aimed for this age group. Also, the fat content of the third composition for young children between 1 year and 2 years is higher than conventional compositions for this age group. Conventional follow-on formulae and conventional growing-up milks are aimed at infants and young children of 6 months to 1 year and 1 year to 2 years generally have a fat content of 4.8g /100 kcal and 4.0g/100 kcal, respectively.

In addition, the set of nutritional compositions for infants and young children has a fat profile which varies with age and which meets the nutritional needs of infants and young children at different ages.

As an example a fat mix with soy oil, the first composition of the set of nutritional compositions has a fatty acid profile of 44% saturated fatty acids, 16% polyunsaturated fatty acids and a ratio of linoleic acid to alpha-linolenic acid of 9.5:1. The second composition of the set of nutritional compositions has a fatty acid profile of 44% saturated fatty acids, 16% polyunsaturated fatty acids and a ratio of linoleic acid to alpha-linolenic acid of 9.5:1. The third composition of the set of nutritional compositions has a fatty acid profile of 44% saturated fatty acids, 16% polyunsaturated fatty acids and a ratio of linoleic acid to alpha-linolenic acid of 9.5:1. The fourth composition the set of nutritional compositions has a fatty acid profile of between 8 and 20% saturated fatty acids, between 18 and 30 % polyunsaturated fatty acids and a ratio of linoleic acid to alpha-linolenic acid of between 5:0 and 7:0.

Any of the compositions which form part of set of nutritional compositions may further comprise long-chain polyunsaturated fatty acids (LC-PUFA). LC-PUFA's have been linked to benefits in the development of infants and young children. Preferably, the LC-PUFA's are selected from docosahexaenoic acid (DHA), arachidonic acid (ARA) and Di-homo-gamma-linolenic acid (DGLA) or any mixtures thereof. Most preferably, the first, second and third nutritional compositions comprise a mixture of DHA and ARA. Most preferably, the fourth composition comprises docosahexaenoic acid (DHA).

Any of the compositions which form part of set of nutritional compositions may further comprise carbohydrates. Suitable carbohydrates include lactose, saccharose, maltodextrin, starch or any mixtures thereof. In a preferred embodiment, the first and second compositions comprise lactose. Preferably, the amount of lactose in the first and second compositions is between 9.0 and 13 g/100 kcal, preferably between 9.5 and 12 g/100kcal. The third and fourth compositions preferably comprise a mixture of lactose and maltodextrin. It is preferable that the maltodextrin has a DE of 19. It is preferable that a ratio of lactose:maltodextrin in the third and fourth compositions is 70:30.

Any of the compositions which form part of set of nutritional compositions may further comprise proteins. The proteins can be intact protein or hydrolysed protein, milk fat globule membrane (MFGM) protein, casein, whey, soy protein, lactoferrin, lysozyme, immunoglobulins, or any mixtures thereof. In a preferred embodiment, the compositions comprise a mixture of whey and casein. Preferably, a ratio of whey to casein in the first composition is 70:30. The second and third compositions preferably have a ratio of whey:casein of 50:50. Preferably, the fourth composition has a whey to casein ratio of 40:60. The protein content in the compositions preferably varies between 1.5 to 2.5 g/100kcal. For instance, the first composition may comprise a protein content of 1.8 to 2.25 g/100kcal. The second composition may comprise a protein content of 1.8 g/100kcal. The third composition may comprise a protein content of 2 g /100kcal. The protein content of the fourth composition is preferably 2.25 g/100kcal.

Any of the compositions which form part of set of nutritional compositions may further comprise vitamins selected from vitamin A, beta-carotene, vitamin D, vitamin E, vitamin K1, vitamin C, vitamin B1, vitamin B2, niacin, vitamin B6, folic acid, pantothenic acid, vitamin B12, biotin.

Additional substances such as choline, inostol, taurine and carnitine may also be present in set of nutritional compositions.

Any of the compositions which form part of set of nutritional compositions may further comprise minerals selected from sodium, potassium, chloride, calcium, phosphorus, magnesium, manganese, or any mixtures thereof.

Trace elements such as iron, iodine, copper, zinc, selenium, fluorine, chromium, molybdenum or any mixtures thereof may also be the set of nutritional compositions

In a preferred embodiment, any of the compositions forming part of the set may comprise lactoferrin.

Additionally, any of the compositions may comprise prebiotics. If present, the prebiotic is preferably present in the compositions in an amount of 2-8 grams per litre. Prebiotics are a non-digestible food ingredient that beneficially affects the host by selectively stimulating the growth and/or activity of one or a limited number of bacteria in the colon, and thus improves host health. Such ingredients are non-digestible in the sense that they are not broken down and absorbed in the stomach or small intestine and thus pass intact to the colon where they are selectively fermented by the beneficial bacteria. Examples of prebiotics include certain oligosaccharides, such as fructooligosaccharides (FOS) and galactooligosaccharides (GOS). A combination of prebiotics may be used such as 90% GOS with 10% short chain fructooligosaccharides such as the product sold under the trade mark Raftilose® or 10% inulin such as the product sold under the trade mark Raftiline®. A particularly preferred prebiotic is a mixture of galacto-oligosaccharide(s), N-acetylated oligosaccharide(s) and sialylated oligosaccharide(s) in which the N- acetylated oligosaccharide(s) comprise 0.5 to 4.0% of the oligosaccharide mixture, the galacto-oligosaccharide(s) comprise 92.0 to 98.5% of the oligosaccharide mixture and the sialylated oligosaccharide(s) comprise 1.0 to 4.0% of the oligosaccharide mixture. This mixture is hereinafter referred to as "CMOS-GOS". Preferably, any of the compositions of the set for the invention contain from 2.5 to 15.0 wt% CMOS-GOS on a dry matter basis with the proviso that the composition comprises at least 0.02 wt% of an N-acetylated oligosaccharide, at least 2.0 wt% of a galacto-oligosaccharide and at least 0.04 wt% of a sialylated oligosaccharide. Suitable N-acetylated oligosaccharides include GalNAcαl, 3GaLβl, 4Glc and Galβl, 6GalNAcαl, 3Galβl, 4Glc. The N-acetylated oligosaccharides may be prepared by the action of glucosaminidase and/or galactosaminidase on N-acetyl-glucose and/or N-acetyl galactose. Equally, N-acetyl-galactosyl transferases and/or N-acetyl-glycosyl transferases may be used for this purpose. The N-acetylated oligosaccharides may also be produced by fermentation technology using respective enzymes (recombinant or natural) and/or microbial fermentation. In the latter case the microbes may either express their natural enzymes and substrates or may be engineered to produce respective substrates and enzymes. Single microbial cultures or mixed cultures may be used. N-acetylated oligosaccharide formation can be initiated by acceptor substrates starting from any degree of polymerisation (DP) from DP=1 onwards. Another option is the chemical conversion of keto-hexoses (e.g. fructose) either free or bound to an oligosaccharide (e.g. lactulose) into N-acetylhexosamine or an N-acetylhexosamine containing oligosaccharide as described in Wrodnigg, T. M.; Stutz, A.E. (1999) Angew. Chem. Int. Ed. 38:827-828.

Suitable galacto-oligosaccharides include Galβl,6Gal, Galβl,6Galβl,4Glc, Galβl,6Galβl,6Glc, Galβl,3Galβl,3Glc, Galβl,3Galβl,4Glc, Galβ1,6Galβ1,6Galβ1,4Glc, Galβ1,6Galβ1,3Galβ1,4Glc, Galβ1,3Galβ1,6Galβ1,4Glc, Galβl, 3Galβl,3Galβl,4Glc, Galβl,4Galβl,4Glc and Galβl,4Galβl,4Galβl,4Glc.

Synthesised galacto-oligosaccharides such as Galβl,6Galβl, 4Glc, Galβl,6Galβl,6Glc, Galβl,3Galβl,4Glc, Galβl,6Galβl,6Galβl,4Glc, Galβl,6Galβl,3Galβl,4Glc and Galβl,3Galβl,6Galβl,4Glc, Galβl,4Galβl,4Glc and Galβl,4Galβl,4Galβl,4Glc and mixtures thereof are commercially available under the trademarks Vivinal® and Elix'or®. Other suppliers of oligosaccharides are Dextra Laboratories, Sigma-Aldrich Chemie GmbH and Kyowa Hakko Kogyo Co.,Ltd. Alternatively, specific glycosyltransferases, such as galactosyltransferases may be used to produce neutral oligosaccharides.

Suitable sialylaled oligosaccharides include NeuAcα2,3Galβl,4Glc and NeuAcα2, 6Galβl, 4Glc. These sialylated oligosaccharides may be isolated by chromatographic or filtration technology from a natural source such as animal milks. Alternatively, they may also be produced by biotechnology using specific sialyltransferases either by enzyme based fermentation technology (recombinant or natural enzymes) or by microbial fermentation technology. In the latter case microbes may either express their natural enzymes and substrates or may be engineered to produce respective substrates and enzymes. Single microbial cultures or mixed cultures may be used. Sialyl-oligosaccharide formation can be initiated by acceptor substrates starting from any degree of polymerisation (DP) from DP=1 onwards.

The compositions may optionally contain other substances which may have a beneficial effect such as nucleotides, nucleosides, and the like. Nucleotides may be selected from cytidine monophosphate (CMP), uridine monophosphate (UMP), adenosine monophosphate (AMP), guanosine monophosphate (GMP) or any mixtures thereof.

Any of the compositions which form part of set of nutritional compositions may comprise at least one probiotic bacterial strain. Examples of suitable probiotic micro-organisms include yeasts such as Saccharomyces, *Debaromyces, Candida, Pichia* and *Torulopsis,* moulds such as *Aspergillus, Rhizopus, Mucor,* and *Penicillium* and *Torulopsis* and bacteria such as the genera *Bifidobacterium, Bacteroides, Clostridium, Fusobacterium, Melissococcus, Propionibacterium, Streptococcus, Enterococcus, Lactococcus, Staphylococcus, Peptostrepococcus, Bacillus, Pediococcus, Micrococcus, Leuconostoc, Weissella, Aerococcus, Oenococcus* and *Lactobacillus.* Specific examples of suitable probiotic micro-organisms are: *Saccharomyces cereviseae, Bacillus coagulans, Bacillus licheniformis, Bacillus subtilis, Bifidobacterium bifidum, Bifidobacterium infantis, Bifidobacterium longum, Enterococcus faecium, Enterococcus faecalis, Lactobacillus acidophilus, Lactobacillus alimentarius, Lactobacillus casei subsp. casei, Lactobacillus casei Shirota, Lactobacillus curvatus, Lactobacillus delbruckii subsp. lactis, Lactobacillus farciminus, Lactobacillus gasseri, Lactobacillus helveticus, Lactobacillus johnsonii, Lactobacillus reuteri, Lactobacillus rhamnosus* (*Lactobacillus GG*), *Lactobacillus sake, Lactococcus lactis, Micrococcus varians*, *Pediococcus acidilactici, Pediococcus pentosaceus, Pediococcus acidilactici, Pediococcus halophilus, Streptococcus faecalis, Streptococcus thermophilus, Staphylococcus carnosus,* and *Staphylococcus xylosus.* Preferred probiotic bacterial strains include *Lactobacillus rhamnosus* ATCC 53103 obtainable from Valio Oy of Finland under the trade mark LGG, *Lactobacillus rhamnosus* CGMCC 1.3724, *Lactobacillus paracasei* CNCM 1-2116, *Lactobacillus reuteri* ATCC 55730 and *Lactobacillus reuteri* DSM 17938 obtainable from BioGaia AB, *Bifidobacterium lactis* CNCM 1-3446 sold *inter alia* by the Christian Hansen company of Denmark under the trade mark Bb 12 and *Bifidobacterium longum* ATCC BAA-999 sold by Morinaga Milk Industry Co. Ltd. of Japan under the trade mark BB536. An amount of probiotic, if present, likewise preferably varies as a function of the age of infants and young children. Generally speaking, the probiotic content may increase with increasing age of the for infants and young children for example from 10³ to 10¹² cfu/g composition, more preferably between 10⁴ and 10⁸ cfu/g composition (dry weight). In a preferred embodiment, any of the nutritional compositions of the set comprise 2x10⁷ cfu/g. Most preferably, the probiotic is *Bifidobacterium lactis.*

It has been found that the set of the invention provides long-term benefits over a period of at least two years, where the infants and young children have a balanced nutritional intake especially in terms of fat.

The set provides an optimal fat content and profile at all ages and avoids the pitfalls of overdosing or under-dosing certain types of fat.

It has been further been found that set of nutritional compositions work in synergy such that optimal health effects to infants and young children are observed when the nutritional compositions are used consequently. Therefore, using the nutritional compositions independently (i.e. not as part of a set) would not achieve the beneficial effects to the same extent.

In addition, the set of nutritional compositions provides long-term health benefits to infants and young children. For instance, a reduction in obesity later in life has been linked to feeding the set of nutritional compositions to infants and young children. Thus, a use of the set of nutritional compositions is for reducing obesity later in life.

Other health benefits associated with the present invention include a growth within the usually accepted growth curves (from weight gain or size growth or combination thereof), the reduction of occurrence of diabetes, especially type II diabetes and better immune status (including less bacterial and/or viral infections), and/or less allergies.

Further benefits also include the reduction of cardiovascular diseases later in life.

The beneficial health effects can be measured by reduced frequency of occurrence and/or for their attenuated symptoms when they occur and/or their low negative health impact (i.e. intensity of effect). This is defined in comparison to the average occurrence/ frequency/intensity of the health effects/status in the general population.

The long term health effect and/or the effect "later in life" is evidenced at a certain time after the diet of the invention has been stopped. Typically such beneficial health effects are expected to be seen (scientifically measurable) 1, 2, 5, 7, 10, 15, 20 or 40 years after having stopped the claimed set of compositions. In one embodiment these times are the time were the health effects start to the observed and the health effect continue to be measurable for a period of 1, 3, 5, 10, 15, 20, 30 additional years.

The health effects can hence be measurable at the age of 2, 3, 4, 5, 7, 10, 13, 15, 18, 20, 25, 30, 35, 40, 45, 50, or 60. In one embodiment the health effects can be measurable from these respective ages and for a period of 1, 3, 5, 10, 15, 20, 30 additional years.

In one embodiment the health effect is an increase life expectancy of 1 week, 2 weeks, 1 month, 3 months, 6 months, or 1, 2, 3, 4,5 ,10 years in comparison to the relevant general population.

For example the infants and young children receiving the claimed set of compositions experience beneficial health effect at the age of 7 or 10 and/or 5 or 7 years after having stopped the claimed set of compositions.

The set of nutritional compositions for infants and young children aims to match closely the nutritional evolution curve of human breast milk, at least with respect to the fat content and profile of fatty acids.

In a preferred embodiment of the invention, the second and third compositions are identical.

The nutritional compositions may be prepared in any suitable manner. For example, an infant formula may be prepared by blending together a protein source, a carbohydrate source, and a fat source in appropriate proportions. If used, emulsifiers may be included in the blend. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture.

The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger. The liquid mixture may then be cooled to about 60°C to about 85°C for example by flash cooling. The liquid mixture may then be homogenised for example in two stages at about 7 MPa to about 40 MPa in the first stage and about 2 MPa to about 14 MPa in the second stage. The homogenised mixture may then be further cooled to add any heat sensitive components such as vitamins and minerals. The pH and solids content of the homogenised mixture are conveniently standardised at this point . The homogenised mixture is transferred to a suitable drying apparatus such as a spray drier or freeze drier and converted to powder. The powder should have a moisture content of less than about 3% by weight. Alternatively, the homogenized mixture is concentrated.

If it is desired to add probiotic(s), they may be cultured according to any suitable method and prepared for addition to the infant formula by freeze-drying or spray-drying for example. Alternatively, bacterial preparations can be bought from specialist suppliers such as Christian Hansen and Morinaga already prepared in a suitable form for addition to food products such as infant formula. Such bacterial preparations may be added to the powdered infant formula by dry mixing.

The set of nutritional compositions is used to feed infants and young children for at least the first two years of life and preferably after the second year. Thus, the invention also relates to a method for providing nutrition to infants and young children. The method comprises feeding the infants and young children the set of nutritional compositions at the corresponding ages.

In an embodiment of the invention, the nutritional compositions are packed in single dose units, each single dose unit comprising sufficient nutritional composition to prepare a single serving upon reconstitution with water.

A single serving generally comprises 10-35 g of powder to be reconstituted with 80-220 mL of water.

The set of nutritional compositions is used for providing infants and young children with a balanced nutritional diet for at least the first two years of life.

Another facet of the invention therefore relates to an infants and young children nutrition regimen. The regimen comprises feeding infants and young the set of nutritional compositions.

The first composition is fed to infants and young children aged between 0 and 6 months, such that a total daily intake is preferably between 300-650 kcal and is at least 300 kcal.

The second composition is fed to infants and young children aged between 6 and 12 months with complimentary foods, such that a total daily intake is between 600 - 900 kcal and is preferably 600 Kcal.

The third composition is fed to infants and young children aged between 1 and 2 years with complimentary foods, such that the total daily intake is between 700 - 1100kcal and is preferably 700 kcal.

Preferably the fourth composition is fed to infants and young children aged over 2 years with complimentary foods, such that the total daily intake is between 1000 - 1200 kcal and is preferably 900 kcal.

The complementary solid foods may be any of the foods commercially available for the corresponding age range. These include pureed vegetables, meats, fish, fruits, etc.

It has been found that such a regimen provides a child with a balanced nutritional intake at least for the first two years of life and an optimal intake of fat at all ages.

The invention also pertains to an age-tailored kit for infants and young children. The kit comprises the set of nutritional compositions as described. The nutritional compositions are packed in the single dose units, each unit comprising sufficient nutritional composition to prepare a single serving upon reconstitution with water. Typically, the single dose units comprise 10 to 35 g of powdered nutritional composition. Preferably the single dose units are in the form of capsules. The single dose units may also be in the form of stick packs or sachets.

The capsules may be disposable capsules equipped with opening means contained as part of the capsule. The opening means permits draining of the reconstituted formula directly from the capsule into a receiving vessel such as a bottle. Such a method of using capsules for dispensing an infant or young child nutritional composition is described in WO2006/077259. The different nutritional compositions forming part of the set of the invention may be packed into individual capsules and presented to the consumer in multipacks containing a sufficient number of capsules to meet the requirements of an infant for one week for example. Suitable capsule constructions are disclosed in WO2003/059778.

The present invention is further illustrated hereinafter by means of the following non-limiting examples.

### Examples

An age-tailored set of nutritional compositions is given in the table below:

| | Formula | | | | |
|---|---|---|---|---|---|
| | Age Range | 0-6 months | 7-12 months | 1-2 yr | 2-3 yr |
| Basics | Reconstitution RTD Volume (ml) | 100-200 | 230 | 230 | 230 |
| | Energy density (kcal/100 ml) | 63-67 | 63 | 63 | 63 |
| Protein | Content (g/100kcal) | 1.8-2.25 | 1.8 | 2 | 2.25 |
| | Content (g/l) | 11.3-15.1 | 11.3 | 12.6 | 14.2 |
| | Whey:Casein | 70:30 | 50:50 | 50:50 | 40:60 |
| | Functional proteins | - | - | - | - |
| Carbo-hydrates | Type | Lactose | Lactose | Lactose/ MD DE19 (70:30) | Lactose/ MD DE19 (70:30) |
| | Content (g/100kcal) | 9.7-11.6 | 10.6 | 10.6 | 14.2 |
| | Content (g/l) | 65.0-73.5 | 66.8 | 66.8 | 89.5 |
| Lipids | Type | Milk & Veg. | Milk & Veg. | Milk & Veg. | Fat mix follows AHA: sat. Fat <7%E + polyuns. <10%E LA/ALA 5.0 |
| | Content (g/100kcal) | 5.1-5.8 | 5.6 | 5.6 | 4 |
| | content (as % of total energy) | 45.9-52.2 | 50.4 | 50.4 | 36 |
| | Content (g/l) | 32.1-38.9 | 35.3 | 35.3 | 25.2 |

| | LC-PUFA | DHA + ARA | DHA + ARA | DHA + ARA | DHA 0.3%tfa |
|---|---|---|---|---|---|
| Soluble Fibers | Content (g/100kcal) | 0.6g/ 100 kcal | 0.6g/ 100 kcal | 0.6g/ 100 kcal | 0.6g/ 100 kcal |
| Probiotic s | Type | *B.lactis* | | | |
| | Content | 2x 10⁷cfu/g powder | 2x 10⁷cfu/g powder | 2x 10⁷cfu/g powder | 2x 10⁷cfu/g powder |
| Nucleotid es | CMP (mg/100 kcal) | 1.1 | - | - | - |
| | UMP | 0.7 | - | - | - |
| | AMP | 0.7 | - | - | - |
| | GMP | 0.2 | - | - | - |
| Minerals (/100kcal ) | Na (mg) | 25-37.5 | 25 | 25 | - |
| | K (mg) | 80-95 | 80 | 80 | - |
| | *Na*/*K (molar ratio)* | 0.53-0.67 | 0.53 | 0.53 | - |
| | *(Na+K)* /*Cl molar ratio* | 1.71-1.81 1.71-1.811.71 | 1.71 | 1.71 | - |
| | Cl (mg) | 65-80 | 65 | 65 | - |
| | Ca (mg) | 60 | 60 | 80 | 80 |
| | P (mg) | 33 | 33 | 50 | 50 |
| | Mg (mg) | 7 | 7 | 10 | 10 |
| | Mn (µg) | 5 | 5 | - | - |
| | Ca/P | 1.8 | 1.8 | 1.6 | 1.6 |
| Vitamins and other compounds (/100kcal ) | Vit. A (mg RE) | 0.09-0.1125 | 0.09 | 0.06 | 0.06 |
| | Vit. D (mg) | 0.0015 | 0.0015 | 0.0018 | 0.0018 |
| | Vit. E (mg) | 1.3 | 1.3 | 1.3 | 1.3 |
| | Vit. K1 (µg) | 8 | 8 | 4 | 4 |
| | Vit. C (mg) | 15 | 15 | 10 | 10 |
| | Vit. B1 (mg) | 0.07-0.1 | 0.1 | 0.08 | 0.08 |
| | Vit. B2 (mg) | 0.1 | 0.1 | 0.08 | 0.08 |
| | Niacin (mg) | 0.5 | 0.5 | 0.8 | 0.8 |
| | Vit. B6 (mg) | 0.05 | 0.05 | 0.07 | 0.07 |
| | Folic acid (µg) | 15-16 | 15 | 15 | 15 |
| | Pantothenic Acid (mg) | 0.7-0.8 | 0.8 | 0.4 | 0.4 |
| | Vit. B12 (µg) | 0.2 | 0.2 | 0.15 | 0.15 |
| | Biotin (µg) | 2 | 2 | 1.5 | 1.5 |
| | Choline (mg) | 20 | 20 | 30 | 30 |
| | Inositol (mg) | 25-20 | 20 | - | - |
| | Taurine (mg) | 8-6 | 6 | - | - |
| | Carnitine (mg) | 2.0-1.5 | - | - | - |
| Trace Elements (/100kcal ) | Fe (mg) | 0.7-0.85 | 1 | 1 | 1 |
| | I (µg) | 15-20 | 20 | 15 | 15 |
| | Cu (mg) | 0.06-0.08 | 0.06 | 0.05 | 0.05 |
| | Zn (mg) | 1-1.2 | 0.8 | 0.6 | 0.6 |
| | Se (µg) | 3-4 | 3 | 3.5 | 3.5 |
| | F (µg) | | - | - | - |

It was shown that feeding a set of nutritional compositions as exemplified above, the dietary need of infants/young children were met, in particular with regards to fat content and profile. Also, the compositions were a close match of human breast milk at the different ages.

Having thus described the present invention in detail and the advantages thereof, it is to be understood that the detailed description is not intended to limit the scope of the invention thereof.

What is desired to be protected by letters patent is set forth in the following claims.

## Claims

1. A set of nutritional compositions for infants and young children comprising at least
- a first composition for infants between 0 and 6 months comprising fat consisting of a mix of vegetable fats and animal fats, preferably in a ratio of 70:30 (vegetable fat:animal fat) to 30:70,
- a second composition for infants between 6 months and 1 year comprising a mix of vegetable fats and animal fats; and
- a third composition for young children between 1 year and 2 years comprising a mix of vegetable fats and animal fats.

2. The set of nutritional compositions for infants and young children according to claim 1 further comprising a fourth composition for young children above 2 years comprising vegetable fats.

3. The set of nutritional compositions for infants and young children according to any of the above claims, wherein the first composition comprises the mix of vegetable fats and animal fats, in a ratio of 60:40 (vegetable fat:animal fat) to 40:60.

4. The set of nutritional compositions for infants and young children according any one of the above claims, wherein the first composition comprises the mix of vegetable fats and animal fats, in a ratio of 50:50 vegetable fat:animal fat).

5. The set of nutritional compositions for infants and young children according any one of the above claims, wherein
- a fat content of the first composition is between 44 and 54% of the total energy for said first composition,
- a fat content of the second composition is between 44 and 54% of the total energy for said second composition; and
- a fat content of the third composition is between 44 and 54% of the total energy for said third composition.

6. The set of nutritional compositions for infants and young children according to claim 2, wherein a fat content of the fourth composition is between 30 and 45% of the total energy for said fourth composition.

7. The set of nutritional compositions for infants and young children according to any of the preceding claims, wherein
- the first composition for infants between 0 and 6 months has a fat content of between 5 and 6g/100kcal, preferably between 5.1 and 5.8 g/100 kcal of the first composition,
- the second composition for infants between 6 months and 1 year has a fat content of between 5 and 6g/100kcal, preferably between 5.3 and 6g/100 kcal of the second composition;
- the third composition for young children from 1 year to 2 years has a fat content of between 5 and 6g/100kcal, preferably between 5.5 and 6g/100 kcal of the third composition.

8. The set of nutritional compositions for infants and young children according claims 6, wherein the fourth composition for young children over 2 years has a fat content of between 3 and 5g/100kcal, preferably between 3.5 and 4.5g/100kcal of the fourth composition.

9. The set of nutritional compositions for infants and young children according to any of the preceding claims, wherein the vegetable fats are selected from the group consisting of palm olein, high oleic sunflower oil, high oleic safflower oil, coconut oil, soy oil, canola oil, sunflower oil, safflower oil, soy lecithin, single cell oils derived from fungus and algae or any mixtures thereof.

10. The set of nutritional compositions for infants and young children according to any of the preceding claims, wherein the animal fats are selected from at least one of milk fat and fish fat or combinations thereof.

11. The set of nutritional compositions for infants and young children according to any of the preceding claims, wherein
- the first composition has a fatty acid profile of 44% saturated fatty acids, 16% polyunsaturated fatty acids, and a ratio of linoleic acid to alpha-linolenic acid of 9.5:1,
- the second composition has a fatty acid profile of 44% saturated fatty acids, 16% polyunsaturated fatty acids, and a ratio of linoleic acid to alpha-linolenic acid of 9.5:1; and
- the third composition has a fatty acid profile of 44% saturated fatty acids, 16% polyunsaturated fatty acids, and a ratio of linoleic acid to alpha-linolenic acid of 9.5:1.

12. The set of nutritional compositions for infants and young children according to claim 8, wherein
- the fourth composition has a fatty acid profile of between 8 and 20% saturated fatty acids, between 18 and 30% polyunsaturated fatty acids, and a ratio of linoleic acid to alpha-linolenic acid of between 5:0 and 7:0.

13. The set of nutritional compositions for infants and young children according to any of the preceding claims, wherein at least one of the first, second, third or fourth composition comprises long-chain polyunsaturated fatty.

14. The set of nutritional compositions for infants and young children according to any of the preceding claims, wherein any of the first, second, third or fourth composition comprises vitamins, minerals, trace elements, lactoferrin, probiotics, prebiotics, proteins such as those of MFGM, lysozyme, immunoglobulins, hydrolysed or non-hydrolysed protein, carbohydrates such as lactose, maltodextrin, and any mixtures thereof.

15. A use of the set of nutritional compositions for infants and young children according to any of the preceding claims for providing an infant with a balanced nutritional diet for at least the first three years of life.

16. A method for providing nutrition to a infants and young children in at least the first three years of life comprising feeding to infants and young children the set of nutritional compositions according to any of claims 1 to 14 at the corresponding ages.

17. A dosage regimen for infants and young children comprising:
- feeding a first composition to infants between 0 and 6 months comprising fat consisting of a mix of vegetable fats and animal fats, preferably in a ratio of 70:30 (vegetable fat:animal fat) to 30:70 such that the total daily intake is between 400 - 650 kcal,
- feeding a second composition to infants between 6 months and 1 year comprising a mix of vegetable fats and animal fats and complementary foods such that the total daily intake is between 600 - 900 kcal; and
- feeding a third composition to young children between 1 year and 2 years comprising a mix of vegetable fats and animal fats and complementary foods such that the total daily intake is between 700 - 1100 kcal.

18. The dosage regimen for infants and young children according to claim 15, further comprising:
- feeding a fourth composition to young children above 2 years comprising fat and complementary solid foods, such that the total daily intake is between 1000 - 1200 kcal.

19. An age-tailored nutrition kit for infants and young children comprising a set of nutritional compositions according to any of claims 1 to 14, wherein the nutritional compositions are packed in single dose units, wherein each single dose unit comprising sufficient nutritional composition to prepare a single serving upon reconstitution with water.

20. The age-tailored nutrition kit for infants and young children according to claim 19, wherein the singles dose units are capsules.
